# EUROPEAN PATENT APPLICATION

(11) **EP 4 838 615 A1**
(43) Date of publication of application: **11.11.2026**
(21) Application number: 26174870.1
(22) Date of filing: 27.04.2026
(51) Int. Cl.: H01M 10/0583, H01M 4/70, H01M 10/04, H01M 10/0585

(54) **ELECTRODE LAMINATE AND MANUFACTURING METHOD OF ELECTRODE LAMINATE**

(30) Priority: 07.05.2025 JP 2025077418
(71) Applicant: Toyota Jidosha Kabushiki Kaisha, Toyota-shi, Aichi-ken 471-8571 (JP)
(72) Inventor: IKEYAMA, Suguru, TOYOTA-SHI, AICHI-KEN, 471-8571 (JP); SHIMURA, Yosuke, TOYOTA-SHI, AICHI-KEN, 471-8571 (JP); SAKASHITA, Yasuhiro, TOYOTA-SHI, AICHI-KEN, 471-8571 (JP); HIRUKAWA, Tomofumi, TOYOTA-SHI, AICHI-KEN, 471-8571 (JP); KATO, Kazuhito, TOYOTA-SHI, AICHI-KEN, 471-8571 (JP); NAKANO, Takahiko, TOYOTA-SHI, AICHI-KEN, 471-8571 (JP)
(74) Representative: Cabinet Beau de Loménie

(57) **Abstract**

An electrode laminate includes a plurality of electrode sheets laminated along a first direction and a long separator that extends in a zigzag shape between the electrode sheets. Each of the electrode sheets includes a collector foil and an electrode active material layer provided on a first surface of the collector foil. The first surface of the collector foil includes an electrode region where the electrode active material layer is provided and a non-electrode region that is located outside the electrode region and is in contact with the separator. At least one of the electrode sheets includes a first engagement region that includes a plurality of recessed portions or a plurality of holes at at least a part of the non-electrode region.

## Description

### BACKGROUND OF THE INVENTION

### 1. Field of the Invention

The technology disclosed in the present specification relates to an electrode laminate and a manufacturing method of the electrode laminate.

### 2. Description of Related Art

US 2024-0063424 A discloses an electrode laminate. The electrode laminate includes a plurality of electrode sheets that is laminated and an elongated separator that extends in a zigzag shape between the electrode sheets.

### SUMMARY OF THE INVENTION

**In** the electrode laminate as described above, the electrode sheet disposed between the separators may be shifted with respect to the separators. In view of such circumstances, the present specification provides a technology for suppressing the shift of the electrode sheet with respect to the separator.

The technology disclosed in the present specification is implemented in an electrode laminate. According to a first aspect, the electrode laminate includes a plurality of electrode sheets laminated along a first direction and an elongated separator that extends in a zigzag shape between the electrode sheets. Each of the electrode sheets includes a collector foil and an electrode active material layer provided on a first surface of the collector foil. The first surface of the collector foil includes an electrode region where the electrode active material layer is provided and a non-electrode region that is located outside the electrode region and is in contact with the separator. At least one of the electrode sheets includes a first engagement region that includes a plurality of recessed portions or a plurality of holes at at least a part of the non-electrode region.

In the electrode laminate, the non-electrode region of the collector foil of the electrode sheet is in contact with the separator. The first engagement region is provided in the non-electrode region. The first engagement region includes the recessed portions or the holes and has a non-flat shape. With such a configuration, the separator is engaged with the non-flat shape of the first engagement region, so that the shift of the electrode sheet with respect to the separator is suppressed.

According to a second aspect, in the first aspect, the first engagement region may include the recessed portions and may be provided at a part of the non-electrode region. In this case, a surface roughness of the first engagement region may be larger than a surface roughness of a portion of the non-electrode region other than the first engagement region. With such a configuration, the separator can be engaged with the first engagement region.

According to a third aspect, in the first or second aspect, the at least one of the electrode sheets may further include a second engagement region that includes a plurality of recessed portions on a second surface of the collector foil that is located on a side opposite to the first surface. In this case, the recessed portions present in the first engagement region and the recessed portions present in the second engagement region may be offset from each other in a view along the first direction. With such a configuration, a local decrease in the thickness of the collector foil can be suppressed.

According to a fourth aspect, in any one of the first to third aspects, the collector foil may be provided in a bellows shape in the first engagement region. With such a configuration, the separator can be engaged with the first engagement region having a non-flat shape.

According to a fifth aspect, in any one of the first to fourth aspects, the first engagement region may include the recessed portions. In this case, a depth of each of the recessed portions may be half or less of a thickness of the collector foil. With such a configuration, a local decrease in the thickness of the collector foil can be suppressed.

According to a sixth aspect, in any one of the first to fifth aspects, the first engagement region may include the recessed portions. In this case, a depth of each of the recessed portions may be half or less of a thickness of the separator. With such a configuration, it is possible to suppress damage to the separator.

According to a seventh aspect, in any one of the first to sixth aspects, the first engagement region may include the recessed portions and a flat portion that is provided between two adjacent recessed portions and that spreads along a surface of the separator. With such a configuration, it is possible to suppress damage to the separator as compared with a configuration in which a corner portion that protrudes toward the separator is provided between two adjacent recessed portions.

According to an eighth aspect, in any one of the first to seventh aspects, the separator may extend in a zigzag shape back and forth along a second direction orthogonal to the first direction. In this case, the first engagement region may extend along a third direction orthogonal to the second direction.

The technology disclosed in the present specification is also implemented in a manufacturing method of an electrode laminate. For example, according to a ninth aspect, the manufacturing method includes preparing a plurality of electrode sheets, laminating the electrode sheets and an elongated separator in an alternating manner along a first direction while folding the separator in a zigzag shape, and engaging the separator with the electrode sheets. Each of the electrode sheets includes a collector foil and an electrode active material layer provided on a first surface of the collector foil. The first surface of the collector foil includes an electrode region where the electrode active material layer is provided and a non-electrode region that is located outside the electrode region. The engaging includes pressing at least a part of the non-electrode region of the collector foil that is located between the folded separator with a molding die including projections and recesses.

In the manufacturing method, the non-electrode region of the collector foil is pressed with the molding die including projections and recesses, so that a recessed portion, a protruding portion, or both are provided in the non-electrode region. In this case, since the collector foil is pressed in a state of being located between the separators, a recessed portion, a protruding portion, or both are provided in the non-electrode region, and the recessed portion, the protruding portion, or both that are provided are engaged with the separator. That is, providing a recessed portion, a protruding portion, or both in the non-electrode region and engaging the recessed portion, the protruding portion, or both with the separator can be performed at the same time.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically showing an appearance of a battery 100 using an electrode laminate 10 according to an embodiment;
FIG. 2 is a diagram showing the electrode laminate 10 accommodated in an exterior member 102;
FIG. 3 is a diagram schematically showing a configuration of the electrode laminate 10 according to the embodiment;
FIG. 4A is an enlarged view of a part IV(A) of FIG. 3;
FIG. 4B is an enlarged view of a part IV(B) of FIG. 3;
FIG. 5 is a schematic view of the electrode laminate 10 in a view along a Z direction;
FIG. 6A is a cross-sectional view taken along a VI(A)-VI(A) line in FIG. 5 in a case where a negative electrode sheet 30 and a separator 40 located at an end part in a +Z direction are cut;
FIG. 6B is a cross-sectional view corresponding to FIG. 6A of a modification;
FIG. 6C is a cross-sectional view corresponding to FIG. 6A of the modification;
FIG. 6D is a cross-sectional view corresponding to FIG. 6A of the modification;
FIG. 7 is a diagram showing a step of laminating a plurality of electrode sheets 20, 30 and the separator 40 in an alternating manner; and
FIG. 8 is a diagram showing parts (A) to (C) that are cross-sectional views corresponding to FIG. 6A that are showing, over time, a step of pressing a part of a non-electrode region NA of a negative electrode collector foil 32 that is located between the folded separators 40 with a pressing device 200.

### DETAILED DESCRIPTION OF EMBODIMENTS

The electrode laminate 10 of the embodiment and the battery 100 adopting the electrode laminate 10 will be described with reference to the drawings. The battery 100 is, for example, a lithium-ion secondary battery. The battery 100 has a rectangular flat plate shape. Hereinafter, a thickness direction of the battery 100 will be referred to as a Z direction, a longitudinal direction of the battery 100 will be referred to as an X direction, and a direction orthogonal to each of the Z direction and the X direction will be referred to as a Y direction.

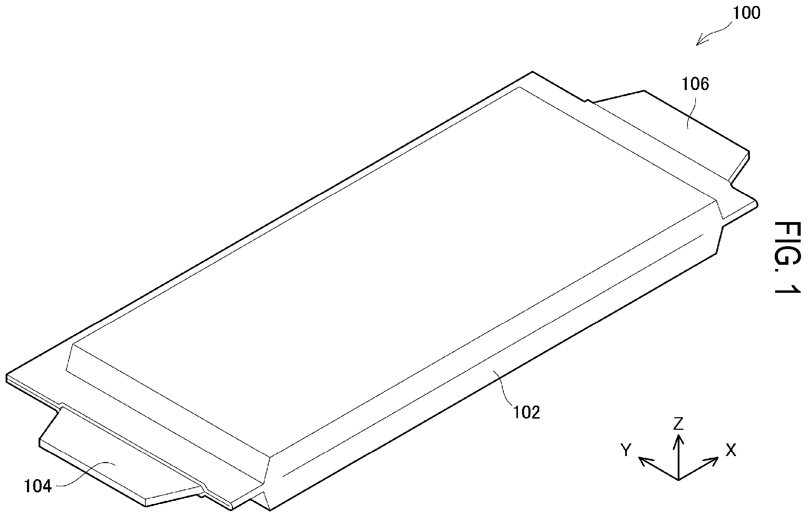

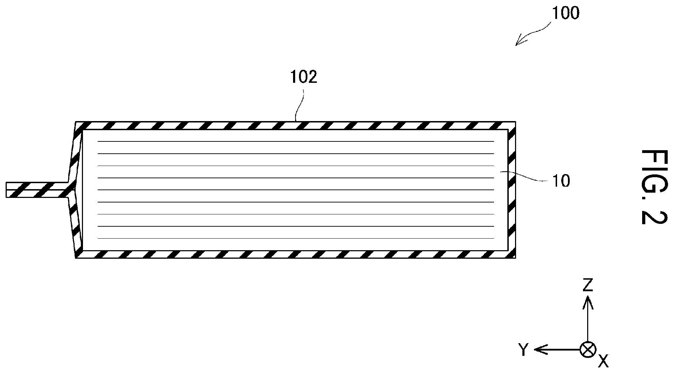

As shown in FIGS. 1 and 2, the battery 100 includes an exterior member 102. The electrode laminate 10 is sealed in the exterior member 102 together with an electrolytic solution (not shown). The exterior member 102 is made of a thin film. The exterior member 102 is, for example, a laminate film in which a resin coating film is provided on both surfaces of an aluminum foil.

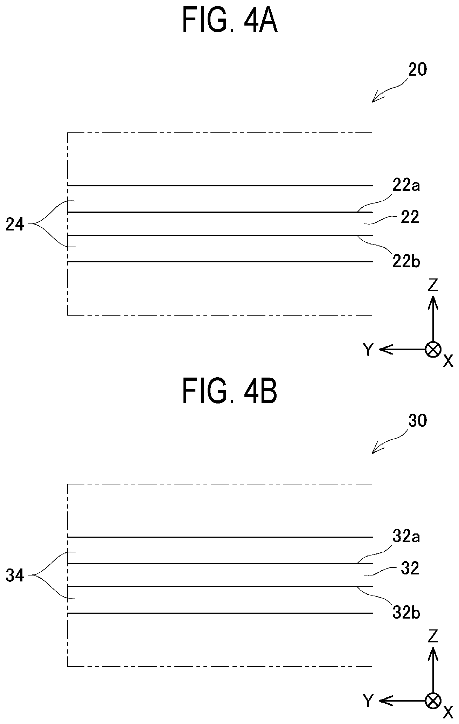

As shown in FIG. 1, the battery 100 further includes a positive electrode terminal 104 and a negative electrode terminal 106. The first end of the positive electrode terminal 104 is exposed to the outside of the exterior member 102, and the second end of the positive electrode terminal 104 is connected to each positive electrode collector foil 22 (see FIG. 4A) of the electrode laminate 10 in the exterior member 102. The first end of the negative electrode terminal 106 is exposed to the outside of the exterior member 102, and the second end of the negative electrode terminal 106 is connected to each negative electrode collector foil 32 (see FIG. 4B) of the electrode laminate 10 in the exterior member 102. The second end of the positive electrode terminal 104 may be connected to each positive electrode collector foil 22 through a tab that is provided integrally with each positive electrode collector foil 22, or may be connected to each positive electrode collector foil 22 through a tab that is joined to each positive electrode collector foil 22 by welding or the like. Similarly, the second end of the negative electrode terminal 106 may be connected to each negative electrode collector foil 32 through a tab that is provided integrally with each negative electrode collector foil 32, or may be connected to each negative electrode collector foil 32 through a tab that is joined to each negative electrode collector foil 32 by welding or the like.

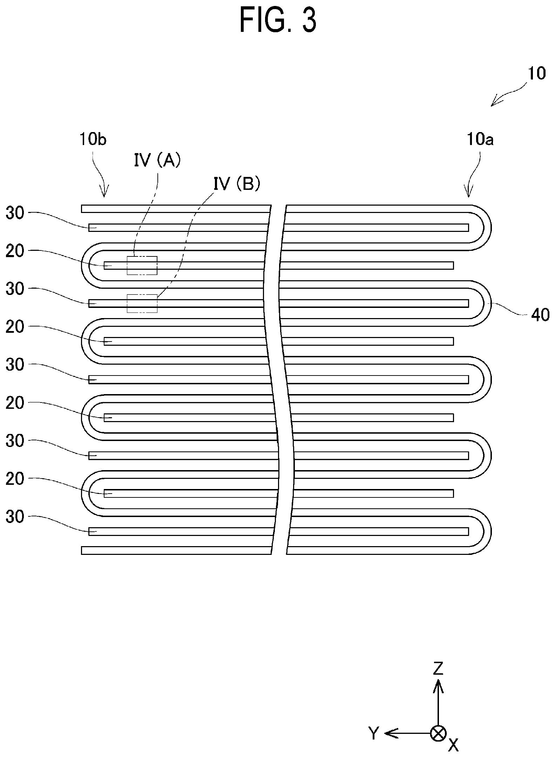

As shown in FIG. 3, the electrode laminate 10 includes a plurality of electrode sheets 20, 30 and a separator 40. The electrode sheets 20, 30 are laminated along the Z direction. Each of the electrode sheets 20, 30 has a rectangular shape as viewed along the Z direction. The electrode sheets 20, 30 include the positive electrode sheets 20 and the negative electrode sheets 30. In one example, a size of each positive electrode sheet 20 is smaller than a size of each negative electrode sheet 30. The separator 40 is an elongated sheet. The separator 40 extends in a zigzag shape between the positive electrode sheets 20 and the negative electrode sheets 30. That is, the separator 40 is folded by alternately repeating mountain folding and valley folding at a predetermined interval. The positive electrode sheet 20 and the negative electrode sheet 30 are alternately laminated one by one between the separator 40. The number of electrode sheets 20, 30 included in the electrode laminate 10 is not particularly limited.

As shown in FIG. 4A, each of the positive electrode sheets 20 includes a positive electrode collector foil 22 and two positive electrode active material layers 24. Each of the positive electrode collector foil 22 and the positive electrode active material layer 24 has a rectangular shape as viewed along the Z direction. A size of the positive electrode collector foil 22 is larger than a size of the two positive electrode active material layers 24. The positive electrode collector foil 22 is, for example, an aluminum foil. One positive electrode active material layer 24 is provided on a first surface 22a (here, a surface in the +Z direction) of the positive electrode collector foil 22, and the other positive electrode active material layer 24 is provided on a second surface 22b (here, a surface in the -Z direction) of the positive electrode collector foil 22. The sizes of the two positive electrode active material layers 24 may be the same as or different from each other.

Each positive electrode active material layer 24 contains a positive electrode active material. Examples of the positive electrode active material include a lithium nickel-based composite oxide, a lithium cobalt-based composite oxide, a lithium manganese-based composite oxide, and the like. The positive electrode active material may contain one kind of material or may contain two or more kinds of materials. Each positive electrode active material layer 24 may further contain a binder, a conductive auxiliary agent, and the like.

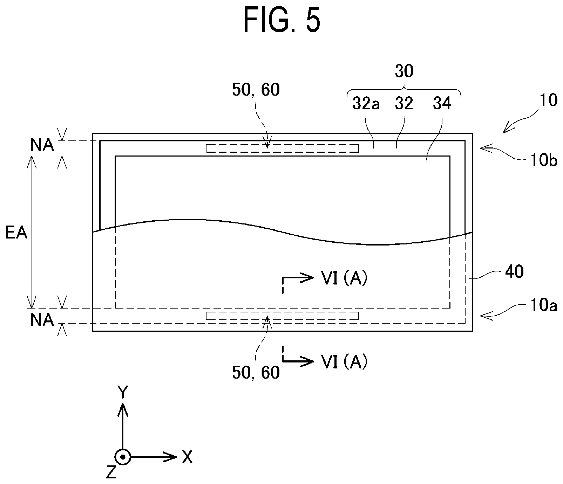

As shown in FIG. 4B, each of the negative electrode sheets 30 includes a negative electrode collector foil 32 and two negative electrode active material layers 34. Each of the negative electrode collector foil 32 and the negative electrode active material layer 34 has a rectangular shape as viewed along the Z direction. As shown in FIG. 5, a size of the negative electrode collector foil 32 is larger than a size of the two negative electrode active material layers 34. The negative electrode collector foil 32 is, for example, a copper foil. One negative electrode active material layer 34 is provided on a first surface 32a (here, a surface in the +Z direction) of the negative electrode collector foil 32, and the other negative electrode active material layer 34 is provided on a second surface 32b (here, a surface in the -Z direction) of the negative electrode collector foil 32. The sizes of the two negative electrode active material layers 34 may be the same as or different from each other.

Each negative electrode active material layer 34 contains a negative electrode active material. Examples of the negative electrode active material include a carbon material such as graphite, hard carbon, and soft carbon, a material that alloys with lithium, such as silicon (Si), and a lithium alloy. The negative electrode active material may contain one kind of material or may contain two or more kinds of materials. Each negative electrode active material layer 34 may further contain a binder and the like.

The separator 40 is configured to allow passage of a charge carrier (here, a lithium ion). The separator 40 is made of, for example, an insulating material such as polypropylene and polyethylene. Examples of the separator 40 include a porous polyethylene film, a porous polypropylene film, or the like.

As described above, in each negative electrode sheet 30, a size of the negative electrode collector foil 32 is larger than a size of the two negative electrode active material layers 34. Therefore, as shown in FIG. 5, in a view along the Z direction, an outer edge of the negative electrode collector foil 32 is located outside an outer edge of each negative electrode active material layer 34. Therefore, the first surface 32a of the negative electrode collector foil 32 includes an electrode region EA where the negative electrode active material layer 34 is provided and a non-electrode region NA that is located outside the electrode region EA. Both the electrode region EA and the non-electrode region NA of the first surface 32a are in contact with the separator 40. Although not shown, the second surface 32b of the negative electrode collector foil 32 includes an electrode region EA where the negative electrode active material layer 34 is provided and a non-electrode region NA that is located outside the electrode region EA. Both the electrode region EA and the non-electrode region NA of the second surface 32b are in contact with the separator 40.

Each negative electrode sheet 30 includes a first engagement region 50 and a second engagement region 60. The first engagement region 50 is provided in a part of the non-electrode region NA on the first surface 32a of the negative electrode collector foil 32. The second engagement region 60 is provided in a part of the non-electrode region NA on the second surface 32b of the negative electrode collector foil 32. In the present embodiment, in a view along the Z direction, the first engagement region 50 overlaps the second engagement region 60.

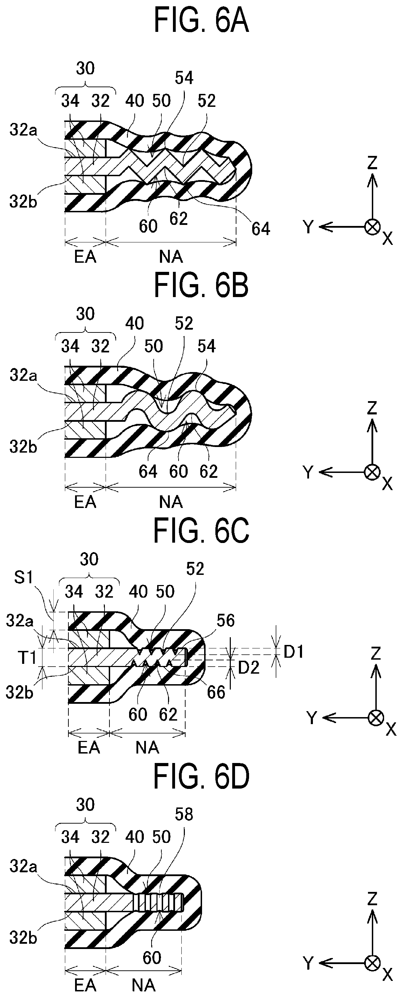

The negative electrode collector foil 32 is provided in a bellows shape in the first engagement region 50 and the second engagement region 60. As a result, as shown in FIG. 6A, the negative electrode collector foil 32 has a non-flat shape including a plurality of recessed portions 52, 62 and a plurality of protruding portions 54, 64 in the first engagement region 50 and the second engagement region 60. In the protruding portions 54, 64, the negative electrode collector foil 32 is bent, and sharp corner portions are provided on each of the surfaces 32a, 32b of the negative electrode collector foil 32. The number of recessed portions 52, 62 (that is, the number of protruding portions 54, 64) is not particularly limited. As another embodiment, as shown in FIG. 6B, in the protruding portions 54, 64, the negative electrode collector foil 32 may be curved, and rounded corner portions may be provided on each of the surfaces 32a, 32b of the negative electrode collector foil 32. In any configuration, the first engagement region 50 has a non-flat shape including a plurality of recessed portions 52. As a result, the separator 40 is engaged with the non-flat shape of the first engagement region 50, so that the shift of the negative electrode sheet 30 with respect to the separator 40 is suppressed. Similarly, the second engagement region 60 has a non-flat shape including a plurality of recessed portions 62. As a result, the separator 40 is engaged with the non-flat shape of the second engagement region 60, so that the shift of the negative electrode sheet 30 with respect to the separator 40 is further suppressed.

In addition, in each of the first engagement region 50 and the second engagement region 60, the protruding portions 54, 64 are provided between two adjacent recessed portions 52, 62. Therefore, as shown in FIG. 6A, in a case where the protruding portion 54 includes a sharp corner portion, the protruding portion 54 is likely to bite into the separator 40, so that the shift of the negative electrode sheet 30 with respect to the separator 40 is further suppressed. On the other hand, as shown in FIG. 6B, in a case where the protruding portion 64 includes a rounded corner portion, it is possible to suppress damage to the separator 40 caused by the protruding portion 64.

In the first engagement region 50, a part of the negative electrode collector foil 32 in the non-electrode region NA is provided in a bellows shape. In this case, on the first surface 32a, a surface roughness of the first engagement region 50 is larger than a surface roughness of a portion of the non-electrode region NA other than the first engagement region 50. The surface roughness here is, for example, an arithmetic average roughness (Ra) measured in accordance with JIS B 0601: 2013. With such a configuration, the separator 40 can be engaged with the first engagement region 50. Similarly, on the second surface 32b, a surface roughness of the second engagement region 60 is larger than a surface roughness of a portion of the non-electrode region NA other than the second engagement region 60.

As shown in FIGS. 6A and 6B, in a view along the Z direction, the recessed portion 52 present in the first engagement region 50 and the recessed portion 62 present in the second engagement region 60 are offset from each other. That is, in a view along the Z direction, the deepest part of the recessed portion 52 in the first engagement region 50 (that is, a part present at the most negative position in the Z direction) does not overlap the deepest part of the recessed portion 62 in the second engagement region 60 (that is, a part present at the most positive position in the Z direction). With such a configuration, a local decrease in the thickness of the negative electrode collector foil 32 can be suppressed.

The recessed portion 52 of the first engagement region 50 and the recessed portion 62 of the second engagement region 60 are not necessarily defined by the negative electrode collector foil 32 provided in a bellows shape. For example, as another embodiment, as shown in FIG. 6C, the recessed portion 52 of the first engagement region 50 may be defined by a groove provided on the first surface 32a of the negative electrode collector foil 32. With such a configuration, the first engagement region 50 has a non-flat shape. Therefore, the separator 40 is engaged with the non-flat shape of the first engagement region 50, so that the shift of the negative electrode sheet 30 with respect to the separator 40 is suppressed. Similarly, the recessed portion 62 of the second engagement region 60 may be defined by a groove provided on the second surface 32b of the negative electrode collector foil 32.

Even in a case where the recessed portion 52 of the first engagement region 50 is defined by the groove provided on the first surface 32a of the negative electrode collector foil 32, on the first surface 32a, a surface roughness of the first engagement region 50 is larger than a surface roughness of a portion of the non-electrode region NA other than the first engagement region 50. Therefore, the separator 40 can be engaged with the first engagement region 50. Similarly, even in a case where the recessed portion 62 of the second engagement region 60 is defined by the groove provided on the second surface 32b of the negative electrode collector foil 32, on the second surface 32b, a surface roughness of the second engagement region 60 is larger than a surface roughness of a portion of the non-electrode region NA other than the second engagement region 60.

In one example, in the configuration shown in FIG. 6C, in a view along the Z direction, the recessed portion 52 present in the first engagement region 50 and the recessed portion 62 present in the second engagement region 60 are offset from each other. That is, in a view along the Z direction, the deepest part of the recessed portion 52 in the first engagement region 50 (that is, a part present at the most negative position in the Z direction) does not overlap the deepest part of the recessed portion 62 in the second engagement region 60 (that is, a part present at the most positive position in the Z direction). In addition, in the configuration shown in FIG. 6C, in a view along the Z direction, any part of a range in which the recessed portion 52 is provided in the first engagement region 50 does not overlap a range in which the recessed portion 62 is provided in the second engagement region 60. With such a configuration, a local decrease in the thickness of the negative electrode collector foil 32 can be suppressed.

In one example, as shown in FIG. 6C, a depth D1 of each of the recessed portions 52 in the first engagement region 50 is half or less of a thickness T1 of the negative electrode collector foil 32. With such a configuration, a local decrease in the thickness T1 of the negative electrode collector foil 32 can be suppressed. The depths of the recessed portions 52 in the first engagement region 50 may be different from each other. In this case, the depth of the deepest recessed portion 52 may be half or less of the thickness T1 of the negative electrode collector foil 32. Similarly, a depth D2 of each of the recessed portions 62 in the second engagement region 60 is half or less of the thickness T1 of the negative electrode collector foil 32.

In one example, as shown in FIG. 6C, a depth D1 of each of the recessed portions 52 in the first engagement region 50 is half or less of a thickness S1 of the separator 40. With such a configuration, it is possible to suppress damage to the separator 40. The depths of the recessed portions 52 in the first engagement region 50 may be different from each other. In this case, the depth of the deepest recessed portion 52 may be half or less of the thickness S1 of the separator 40. Similarly, a depth D2 of each of the recessed portions 62 in the second engagement region 60 is half or less of the thickness S1 of the separator 40.

In one example, as shown in FIG. 6C, in the first engagement region 50, a flat portion 56 that spreads along a surface of the separator 40 is provided between two adjacent recessed portions 52. With such a configuration, it is possible to suppress damage to the separator 40 as compared with a configuration in which a corner portion that protrudes toward the separator 40 is provided between two adjacent recessed portions 52. Similarly, in the second engagement region 60, a flat portion 66 that spreads along a surface of the separator 40 is provided between two adjacent recessed portions 62.

Each of the first engagement region 50 and the second engagement region 60 is not necessarily required to include the recessed portions 52. For example, as still another embodiment, as shown in FIG. 6D, each of the first engagement region 50 and the second engagement region 60 may include a plurality of holes 58 extending through the negative electrode collector foil 32 in the Z direction. With such a configuration, each of the first engagement region 50 and the second engagement region 60 has a non-flat shape. Therefore, the separator 40 is engaged with the non-flat shape of each of the first engagement region 50 and the second engagement region 60, so that the shift of the negative electrode sheet 30 with respect to the separator 40 is suppressed.

In one example, as shown in FIG. 5, the first engagement region 50 extends along the X direction. As shown in FIG. 3, the separator 40 extends in a zigzag shape back and forth along the Y direction. Therefore, the first engagement region 50 extends in a direction orthogonal to a direction in which the separator 40 extends in a zigzag shape back and forth. Similarly, the second engagement region 60 extends along the X direction. A dimension of each of the first engagement region 50 and the second engagement region 60 in the X direction may be, for example, 1/3 or more of a dimension of the negative electrode collector foil 32 in the X direction. Either the first engagement region 50 or the second engagement region 60, or both, may extend along the Y direction.

In the above, the configuration in which the first engagement region 50 is provided on the first surface 32a of the negative electrode collector foil 32 and the second engagement region 60 is provided on the second surface 32b of the negative electrode collector foil 32 in each negative electrode sheet 30 has been described with reference to several embodiments. Although not shown, in each positive electrode sheet 20, the first engagement region 50 is provided on the first surface 22a of the positive electrode collector foil 22, and the second engagement region 60 is provided on the second surface 22b of the positive electrode collector foil 22. In this case, any of the above-described several embodiments can be optionally adopted for each of the first engagement region 50 and the second engagement region 60 of each positive electrode sheet 20. However, at least one of the electrode sheets 20, 30 may include at least one engagement region 50, 60 including a plurality of recessed portions 52, 62 or a plurality of holes 58 in at least a part of the non-electrode region NA. For example, each of the electrode sheets 20, 30 may include one engagement region 50, 60 on any of the first surfaces 22a, 32a and the second surfaces 22b, 32b of the electrode collector foils 22, 32. In addition, for example, each of the electrode sheets 20, 30 may include the engagement regions 50, 60 in the entire non-electrode region NA.

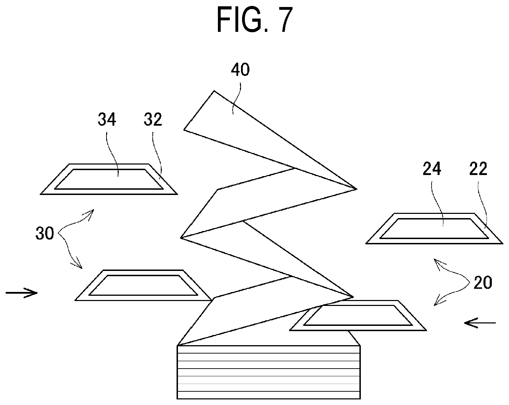

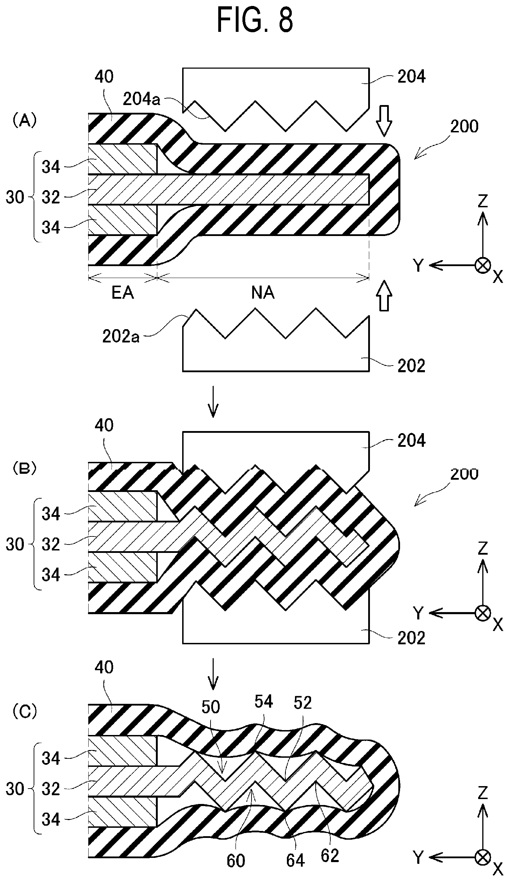

Next, a manufacturing method of the electrode laminate 10 will be described with reference to FIGS. 7 and 8. The manufacturing method includes a step of preparing the electrode sheets 20, 30. The electrode sheets 20, 30 include the positive electrode sheets 20 and the negative electrode sheets 30. As described above, each of the electrode sheets 20, 30 includes the electrode region EA and the non-electrode region NA on the first surfaces 22a, 32a. Similarly, each of the electrode sheets 20, 30 includes the electrode region EA and the non-electrode region NA on the second surfaces 22b, 32b. A method of preparing each negative electrode sheet 30 is not particularly limited. For example, a solution containing an electrode active material may be applied to each of the first surfaces 22a, 32a and the second surfaces 22b, 32b of the electrode collector foils 22, 32, and then the solvent may be evaporated. In addition, for example, the negative electrode active material layers and the collector foils may be integrated by pressing them together in a state where the negative electrode active material layer 34 is disposed on each of the first surfaces 22a, 32a and the second surfaces 22b, 32b of the electrode collector foils 22, 32.

As shown in FIG. 7, the manufacturing method further includes a step of laminating the electrode sheets 20, 30 and the separator 40 in an alternating manner along the Z direction while folding the elongated separator 40 in a zigzag shape. In this step, the separator 40 is folded by alternately repeating mountain folding and valley folding at a predetermined interval back and forth along the Y direction. In this case, the positive electrode sheet 20 and the negative electrode sheet 30 are alternately laminated one by one between the separator 40.

As shown in the parts (A) to (C) of FIG. 8, the manufacturing method further includes a step of engaging the separator 40 with the electrode sheets 20, 30. In this step, for example, a pressing device 200 is used. The pressing device 200 includes a lower molding die 202 and an upper molding die 204. Projections and recesses are provided on each of a surface 202a of the lower molding die 202 and a surface 204a of the upper molding die 204. In the Z direction, the protrusion provided on the surface 202a of the lower molding die 202 faces the recess provided on the surface 204a of the upper molding die 204. As shown in the part (A) of FIG. 8, first, a part of the non-electrode region NA of the negative electrode collector foil 32 that is located between the folded separators 40 is disposed between the lower molding die 202 and the upper molding die 204. In this state, as shown in the part (B) of FIG. 8, the lower molding die 202 is raised and the upper molding die 204 is lowered, so that a part of the non-electrode region NA of the negative electrode collector foil 32 is pressed. As a result, as shown in the part (C) of FIG. 8, a part of the non-electrode region NA of the negative electrode collector foil 32 is provided in a bellows shape. That is, the first engagement region 50 is provided in a part of the non-electrode region NA of the first surface 32a, and the second engagement region 60 is provided in a part of the non-electrode region NA of the second surface 32b (see FIG. 6A). Since the negative electrode collector foil 32 is pressed in a state of being located between the separator 40, the first engagement region 50 and the second engagement region 60 are provided in the non-electrode region NA, and the first engagement region 50 and the second engagement region 60 are engaged with the separator 40. That is, providing the first engagement region 50 and the second engagement region 60 in the non-electrode region NA and engaging the first engagement region 50 and the second engagement region 60 with the separator 40 can be performed at the same time. In a case where the negative electrode collector foil 32 located between the separator 40 is pressed, either or both of the negative electrode collector foil 32 and the separator 40 may be heated. In this case, the engagement regions 50, 60 and the separator 40 can be easily engaged.

As shown in FIG. 3, in an end part 10a of the electrode laminate 10 in the -Y direction, the negative electrode sheet 30 is present between folds of the separator 40, and in an end part 10b of the electrode laminate 10 in the +Y direction, the positive electrode sheet 20 is present between folds of the separator 40. Therefore, in the end part 10a in the -Y direction, the negative electrode sheet 30 is pressed. On the other hand, in the end part 10b in the +Y direction, the positive electrode sheet 20 is pressed by the same method. As a result, the same applies to the positive electrode sheet 20, and providing the first engagement region 50 and the second engagement region 60 in the non-electrode region NA and engaging the first engagement region 50 and the second engagement region 60 with the separator 40 can be performed at the same time.

In one example, the step of laminating the electrode sheets 20, 30 and the separator 40 in an alternating manner along the Z direction and the step of engaging the separator 40 with the electrode sheets 20, 30 are alternately performed. For example, the negative electrode sheet 30 is disposed between the separator 40, the separator 40 is engaged with the negative electrode sheet 30, the positive electrode sheet 20 is disposed between the separator 40, and the separator 40 is engaged with the positive electrode sheet 20. However, the order in which the step of laminating the electrode sheets 20, 30 and the separator 40 in an alternating manner along the Z direction and the step of engaging the separator 40 with the electrode sheets 20, 30 are executed is not limited thereto.

In the embodiment described above, each positive electrode sheet 20 includes two positive electrode active material layers 24. However, in another embodiment, each positive electrode sheet 20 may include one positive electrode active material layer 24 provided on one of the first surface 22a and the second surface 22b of the positive electrode collector foil 22. In addition, in the embodiment described above, each negative electrode sheet 30 includes two negative electrode active material layers 34. However, in another embodiment, each negative electrode sheet 30 may include one negative electrode active material layer 34 provided on one of the first surface 32a and the second surface 32b of the negative electrode collector foil 32.

Although several specific examples have been described in detail above, these are merely examples and do not limit the scope of the claims. The techniques described in the claims include various modifications and changes of the specific examples exemplified above. The technical elements described in the present specification or the drawings exhibit technical usefulness alone or in combination.

## Claims

1. An electrode laminate (10) comprising:
a plurality of electrode sheets (20,30) laminated along a first direction (Z); and
an elongated separator (40) that extends in a zigzag shape between the electrode sheets (20,30), wherein:
each of the electrode sheets (20,30) includes a collector foil (22,32) and an electrode active material layer (24,34) provided on a first surface (22a,32a) of the collector foil (22,32);
the first surface (22a,32a) of the collector foil (22,32) includes an electrode region (EA) where the electrode active material layer (24,34) is provided and a non-electrode region (NA) that is located outside the electrode region (EA) and is in contact with the separator (40); and
at least one of the electrode sheets (20,30) includes a first engagement region (50) that includes a plurality of recessed portions (52) or a plurality of holes (58) at at least a part of the non-electrode region (NA).

2. The electrode laminate (10) according to claim 1, wherein:
the first engagement region (50) includes the recessed portions (52) and is provided at a part of the non-electrode region (NA); and
a surface roughness of the first engagement region (50) is larger than a surface roughness of a portion of the non-electrode region (NA) other than the first engagement region (50).

3. The electrode laminate (10) according to claim 2, wherein:
the at least one of the electrode sheets (20,30) further includes a second engagement region (60) that includes a plurality of recessed portions (62) on a second surface (22b,32b) of the collector foil (22,32) that is located on a side opposite to the first surface (22a,32a); and
the recessed portions (52) present in the first engagement region (50) and the recessed portions (62) present in the second engagement region (60) are offset from each other in a view along the first direction (Z).

4. The electrode laminate (10) according to any one of claims 1 to 3, wherein the collector foil (22,32) is provided in a bellows shape in the first engagement region.

5. The electrode laminate (10) according to any one of claims 1 to 4, wherein:
the first engagement region (50) includes the recessed portions (52); and
a depth (D1) of each of the recessed portions (52) is half or less of a thickness (T1) of the collector foil (22,32).

6. The electrode laminate (10) according to any one of claims 1 to 5, wherein:
the first engagement region (50) includes the recessed portions (52); and
a depth (D1) of each of the recessed portions (52) is half or less of a thickness (S1) of the separator (40).

7. The electrode laminate (10) according to any one of claims 1 to 6, wherein the first engagement region (50) includes the recessed portions (52) and a flat portion (56) that is provided between two adjacent recessed portions (52) and that spreads along a surface of the separator (40).

8. The electrode laminate (10) according to any one of claims 1 to 7, wherein:
the separator (40) extends in a zigzag shape back and forth along a second direction (Y) orthogonal to the first direction (Z); and
the first engagement region (52) extends along a third direction (X) orthogonal to the second direction (Y).

9. A manufacturing method of an electrode laminate (10), the manufacturing method comprising:
preparing a plurality of electrode sheets (20,30);
laminating the electrode sheets (20,30) and an elongated separator (40) in an alternating manner along a first direction (Z) while folding the separator (40) in a zigzag shape; and
engaging the separator (40) with the electrode sheets (20,30), wherein:
each of the electrode sheets (20,30) includes a collector foil (22,32) and an electrode active material layer (24,34) provided on a first surface (22a,32a) of the collector foil (22,32);
the first surface (22a,32a) of the collector foil (22,32) includes an electrode region (EA) where the electrode active material layer (24,34) is provided and a non-electrode region (NA) that is located outside the electrode region (EA); and
the engaging includes pressing at least a part of the non-electrode region (NA) of the collector foil (22,32) that is located between the folded separator (40) with a molding die (202,204) including projections and recesses.
